# EUROPEAN PATENT APPLICATION

(11) **EP 0 595 746 A1**
(43) Date of publication of application: **04.05.1994**
(21) Application number: 93480133.3
(22) Date of filing: 21.09.1993
(51) Int. Cl.: G06F 3/023

(54) **Method and system for input device pressure indication in a data processing system**

(30) Priority: 29.10.1992 US 968605
(71) Applicant: INTERNATIONAL BUSINESS MACHINES CORPORATION, Armonk, N.Y. 10504 (US)
(72) Inventor: Cragun, Brian J., Rochester, MN 55901 (US); Hospers, Paul Alan, Rochester, MN 55901 (US)
(74) Representative: de Pena, Alain

(57) **Abstract**

A method and system are disclosed for providing intuitive and visual indication of pressures exerted by user at pressure sensitive graphical input device, such as a touch screen or mouse, which is coupled to a data processing system. A video display device is utilized to provide a pointer or graphic representation of a input to the pressure sensitive graphical input device at a location within the display which is indicative of that input. Upon selection of the pressure sensitive graphical input device the pressure exerted by the user is periodically determined and utilized to vary the appearance of the graphic representation of that input, permitting variations in the pressure exerted at a pressure sensitive graphical input device to be visually indicated. By automatically varying the color or size of an associated pointer, or by varying a numeric or graphic condition associated with a pointer, in response to an amount of pressure exerted by a user at a pressure sensitive graphical input device that pressure may be easily and continuously determined.

## Description

### BACKGROUND OF THE INVENTION

### 1. Technical Field:

The present invention relates in general to an improved data processing system and in particular to an improved method and system for controlling graphical inputs to a data processing system. Still more particularly the present invention relates to an improved method and system for providing a graphic indication of variations in pressure exerted by a user at a pressure sensitive graphical input device coupled to a data processing system.

### 2. Description of the Related Art:

The manipulation of data in a data processing system is well known in the prior art. Data may be manipulated in many ways in a modern state-of-the-art data processing system. While modern data processing systems are becoming increasingly efficient and continue to operate at a faster and faster speeds the large amounts of data which are available to a user of a modern data processing system often become overwhelming in magnitude and complexity.

As a result of the increasing complexity of data processing systems attempts have been made to simplify the interface between the user and the large amount of data present within a data processing system. One example of an attempt to simplify the interface between a user and a data processing system is the utilization of so-called Graphical User Interface (GUI) to provide an intuitive and graphical interface between the user and a data processing system. The Common User Access (CUA) user interface is one example of such a Graphical User Interface. Common User Access is a trademark of the International Business Machines Corporation. The Common User Access (CUA) user interface is often utilized to organize and present large amount of data to a user in a graphical and intuitive manner.

One technique for presenting large amounts of data, object lists or settings choices to a user is the utilization of the so-called "List Box." A List Box is typically utilized to display a list of settings, choices, or objects, in which the number of choices or objects may vary. A List Box generally displays the settings, choices, or objects, in an order which is meaningful to the user, such as in alphabetical order, numeric order, chronological order, or some other order. For example, modem baud rates are often displayed in numeric order. Typically such List Boxes are large enough to display a plurality of choices, such as 6 or 8, and such boxes often include vertical or horizontal scroll bars, if the data is too large to be entirely visible within the List Box.

A scroll bar is a known user interface component which is associated with a scrollable area of a display that indicates to a user that more information is available and may be added in a particular direction with respect to the display. A scroll bar may be utilized to scroll additional data into view and a scroll bar typically includes a scroll box, a shaft and scroll buttons.

Another relatively recent advance in the computer arts allows a user to simultaneously access, display and manipulate data from a variety of related and/or unrelated computer application programs. This process is generally referred to as "multi-tasking." In a true multi-tasking system, several application programs are active simultaneously. Displays from each of these applications may be provided within a two-dimensional display system by presenting overlapping data collections in multiple layers in a simulated three-dimensional manner within a data processing system.

Each of these layers presents data associated with a parti cular data collection and these layers typically overlap and may partially or completely obscure each other and the data therein. There are, however, certain inherent problems in most of these multi-tasking systems. In order to reach data which the user desires to manipulate, a user must often follow a different and sometimes complicated procedure for each application program and, within each program, at each level of data type, such as file, page, or word, which the user attempts to access. Consequently, the user faces a loss of time due to the number of keystrokes necessary to simply obtain a visual image of a particular data collection in such an overlapping simulated three-dimensional display.

Another example of an overlapping simulated three-dimensional display is often found in so-called "Computer Aided Design-/Computer Aided Manufacturing" programs (CAD/CAM) in which multiple levels of a drawing may be prepared and displayed in a three-dimensional manner. Thus, for example a series of architectural drawings may be viewed by a user including an external view of a building, and by selecting a layer beneath the external view an electrical or plumbing drawing which is associated with the external drawing view may be obtained.

Each of these techniques for displaying multiple layers of data in a simulated three-dimensional manner creates a problem for the user in manipulating that data within a two-dimensional display system. One solution to this problem is a graphical input device which is capable of manipulating displays of data, such as those described above, in a manner which simulates three dimensional manipulation. For example, a touch sensitive screen or mouse input device is commonly utilized in two dimensions (horizontal and vertical) to locate a point within a two- dimensional display. Recently pressure sensitive graphical input devices have been marketed which may be utilized to interpret variations in the amount of pressure exerted by a user utilizing such a device to manipulate data in a third dimension. A problem with such devices arises as a result of inability of the user to accurately gauge the amount of pressure exerted utilizing such a device, without long periods of practice in utilizing a particular device.

Thus, it should be apparent upon review of the foregoing that a need exists for a method and system whereby large amounts of data may be accurately and efficiently manipulated within a simulated three-dimensional data display by providing a method whereby the amount of pressure exerted at a pressure sensitive graphical input device may be accurately and efficiently determined.

### SUMMARY OF THE INVENTION

It is therefore one object of the present invention to provide an improved data processing system.

It is another object of the present invention to provide an improved method and system for controlling the display of large amounts of data utilizing a graphical input to a data processing system.

It is yet another object of the present invention to provide an improved method and system for providing a graphic indication of variations in pressure exerted by a user at a pressure sensitive graphical input device coupled to a data processing system at a point where the user's eye is normally focused.

The foregoing objects are achieved as is now described. The method and system disclosed herein provides an intuitive and visual indication of pressures exerted by a user at a pressure sensitive graphical input device, such as a touch screen or mouse, which is coupled to a data processing system. A video display device is utilized to provide a pointer or graphic representation of a input to the pressure sensitive graphical input device at a location within the display which is indicative of that input. Upon selection of the pressure sensitive graphical input device the pressure exerted by the user is periodically determined and utilized to vary the appearance of the graphic representation of that input, permitting variations in the pressure exerted at a pressure sensitive graphical input device to be visually indicated. By automatically varying the color or size of an associated pointer, or by varying a numeric or graphic condition associated with a pointer, in response to an amount of pressure exerted by a user at a pressure sensitive graphical input device that pressure may be easily and continuously determined.

### BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 is a pictorial representation of data processing system which may be utilized to implement the method and system of the present invention;
Figure 2 is a pictorial representation of multiple embodiments of graphic pointers which have been varied in appearance in response to variations in pressure exerted at a pressure sensitive graphic input device in accordance with the method and system of the present invention;
Figure 3 is a high level block diagram of the data processing system of Figure 1;
Figure 4 is a high level logic flow chart illustrating the varying the appearance of a graphic pointer in accordance with the method and system of the present invention.

### DETAILED DESCRIPTION OF THE INVENTION

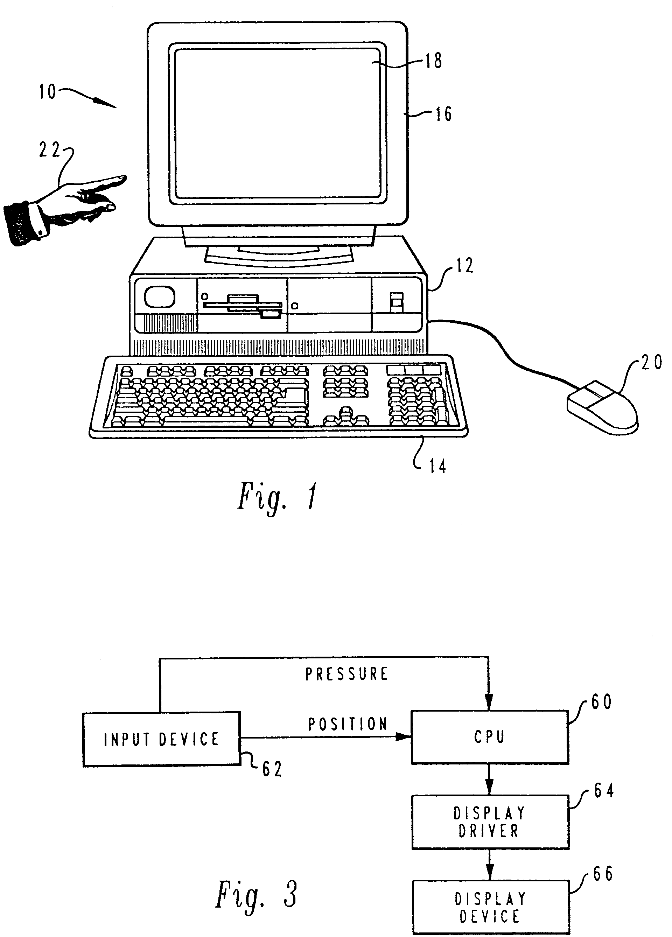

With reference now to the figures and in particular with reference to Figure 1, there is depicted a pictorial representation of a computer system 10 which may be utilized to implement the method and system of the present invention. As is illustrated, computer system 10 preferably includes processor 12 which is coupled to a keyboard 14 and display device 16 in a manner well known in the art. Display device 16 preferably includes a display screen 18 which, in one embodiment of the present invention, is a pressure sensitive touch screen such as the Model #8516 monitor, manufactured by International Business Machines Corporation. As those skilled in the art will appreciate touch screen displays permit a user to provide a graphic input to the computer system by merely touching display screen 18 utilizing the user's hand 22. Additionally, computer system 10 may also include an alternate pressure sensitive graphical input device such as mouse 20. Mouse 20 may be utilized to provide a horizontal and vertical position signal indicative of a point within the display provided by display screen 18 and a button provided within mouse 20 may be utilized to permit the user the exert a variable amount of pressure, in a manner which may interpreted by computer system 10 in order to manipulate data in a simulated three-dimensional display, as will be described in greater detail herein.

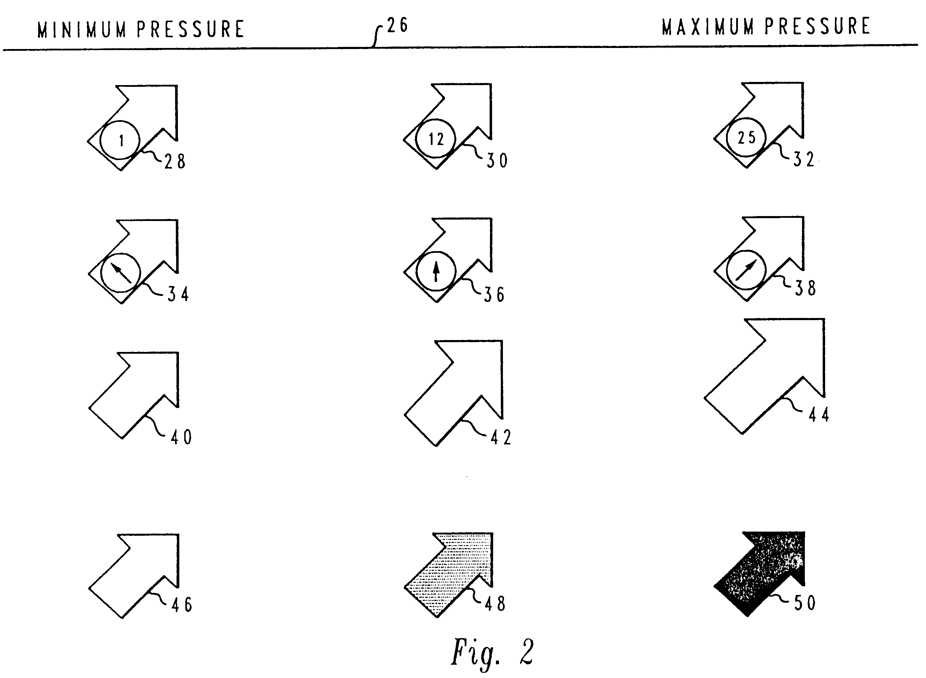

Referring now to Figure 2 there is depicted a pictorial representation of multiple embodiments of graphic pointers which have been varied in appearance in response to variations in pressure exerted at a pressure sensitive graphical input device in accordance with the method and system of the present invention. As illustrated, Figure 2 includes a horizontal line 26 across the top portion thereof. Horizontal line 26 represents graphically a variation in pressure which may exerted by a user utilizing a pressure sensitive graphical input device, such as touch sensitive display screen 18 or mouse 20. The left portion of line 26 represents the minimum amount of pressure which may be detected by the pressure sensitive graphical input device, while the right most portion of line 26 represents the maximum pressure which may be exerted by a user at a pressure sensitive graphical input device.

Still referring to Figure 2 it may be seen that multiple graphic pointers 28, 34, 40, and 46 are illustrated. As the amount of pressure exerted by a user at a pressure sensitive graphical input device increases, from the minimum amount of pressure depicted at the left portion of line 26 to the maximum depicted at the right portion of line 26, the appearance of graphic pointers 28, 34, 40 and 46 will be varied accordingly.

For example, referring to graphic pointer 28, it may be seen that numeric indicia is provided within graphic pointer 28, which may be made to vary in a response to increases in the amount of pressure exerted by a user at a pressure sensitive graphical input device. Similarly, graphic pointer 34 includes a dial indicator which may also vary in response to variations in the pressure exerted by a user at a pressure sensitive graphical input device.

Graphic pointer 40 illustrates another alternate embodiment of the present invention in which the size of the graphic pointer varies in response to the amount of pressure exerted by a user at a pressure sensitive graphical input device. Thus, graphic pointer 42 and graphic pointer 44 are each slightly larger in size, indicating an increase in the amount of pressure exerted at a pressure sensitive graphical input device which is associated with graphic pointer 40. Finally, graphic pointer 46 is illustrated in yet another embodiment of the method and system of the present invention, in which the color of the graphic pointer varies in response to variations in the amount of pressure exerted by a user at a pressure sensitive graphical input device. Thus, the color of graphic pointer 46 will vary, as illustrated within graphic pointer 48 and graphic pointer 50, providing an intuitive and efficient method of illustrating the amount of pressure exerted at a pressure sensitive graphical input device.

Upon reference to the foregoing those skilled in the art will appreciate that by providing a graphic pointer associated with an input to a computer system utilizing a pressure sensitive graphical input device and by varying the appearance of each such pointer in response to variations in the amount of pressure exerted by a user at an associated pressure sensitive graphical input device the user may be intuitively and effectively kept apprised of the amount of pressure exerted at the point where the user's eye is focused. Thus, for example, the user may learn that certain pressure levels applied to a pressure sensitive graphical input device translate to a "tracking" movement for a standard mouse and higher pressure levels are equivalent to a mouse "click", when utilizing a touch sensitive screen. Providing a variable graphic pointer in the manner depicted within Figure 2 the user may rapidly and efficiently learn to detect the differences in the amount of pressures exerted at a pressure sensitive graphical input device.

Of course, those skilled in the art will appreciate that alternative graphic indications of the amount of pressure exerted may also be provided. For example, the "point" of a graphic pointer may be gradually deformed in response to increases in pressure. Alternately, iconic representations in association with each graphic pointer may be utilized to indicate input pressure. Images of "feathers" or "anvils" may be utilized for this purpose. The images within Figure 2 are merely examples of some of the graphic methods which the present invention encompasses.

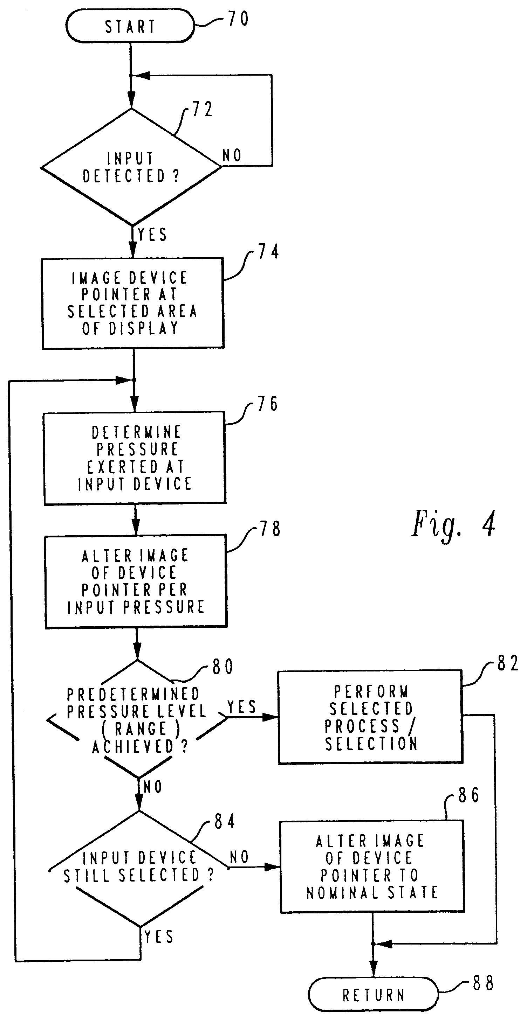

With reference now to Figure 3 there is depicted a high level block diagram of computer system 10 of Figure 1 which illustrates the manner in which the method and system of the present invention may be implemented. As depicted, input device 62 is coupled to CPU 60 and provides inputs to CPU 60 which are representative of a position within the display and the pressure exerted by the user at the input device. These two inputs are utilized by CPU 60 to provide signals to display driver 64. Display driver 64 translates the signals from CPU 60 into a position and an appearance value which may be utilized to provide a display of a graphic pointer, in the manner described above with respect to Figure 2.

Referring now to Figure 4, there is depicted a high level logic flow chart which illustrates the varying of the appearance of a graphic pointer in accordance with the method and system of the present invention. As illustrated, the process begins at block 70 and thereafter passes to block 72. Block 72 illustrates a determination of whether or not an input from a user to a pressure sensitive input device has been detected. If not, the process merely iterates until such time as an input has been detected.

Still referring block 72, in the event an input device has been selected, the process passes to block 74. Block 74 illustrates the imaging of a device pointer at a selected area within the display. Of course, the device pointer may already exist within the display and may merely have to be redrawn at the desired location. Next, the process passes to block 76. Block 76 illustrates a determination of the amount of pressure exerted at the input device by the user, at that moment. Those skilled in the art will appreciate that numerous analog-to-digital conversion schemes may be utilized to simply and efficiently provide a digital representation of the amount of pressure exerted by a user at an input device, all of which may depend upon the particular type of pressure sensitive graphical input device selected.

Next, the process passes to block 78. Block 78 depicts th e altering of the image of the graphic pointer in response to the input pressure determined as illustrated at block 76. Thus, as illustrated with numerous examples in Figure 2 herein, a graphic pointer may be altered in its appearance to graphically and intuitively reflect variations in the amount of pressure exerted by the user at the input device. Thereafter, the process passes to block 80. Block 80 illustrates a determination of whether or not a predetermined pressure level or range has been achieved. If so, the process passes to block 80 which illustrates the performance of a selected process of selection. Thus, in a system in which a predetermined pressure threshold or range corresponds to a particular action, block 80 illustrates a determination of whether or not that action should be implemented. For example, a pressure sensitive touch sensitive screen may be utilized to emulate the action of a mouse pointer, and a selected amount of pressure at the screen may correspond to the so-called mouse "click." Additionally, selected commands may be initiated by exceeding a selected pressure and then lessening the pressure to achieve a lower pressure range.

Referring again to block 80, in the event the predetermined pressure level or range has not been achieved, block 84 depicts a determination of whether or not the input device is still selected. If so, the process returns to block 76, in an iterative fashion, to continue to periodically determine the pressure exerted by the user at the input device and alter the display image of the graphic pointer in response to that input pressure. In the event the input device is no longer selected, as determined at block 84, the process passes to block 86 which depicts the alteration of the image of the device pointer to a nominal state and the process then passes to block 88 and returns.

Upon reference to the foregoing those skilled in the art will appreciate that the Applicants herein have provided a novel method and system whereby the amount of pressure exerted by a user at a pressure sensitive graphical input device, such as a touch screen or three dimensional mouse, may be rapidly and intuitively made apparent to the user such that the utilization of such a device may be greatly enhanced and the amount of time required to train the user to use such a device substantially shortened.

While the invention has been particularly shown and described with reference to a preferred embodiment, it will be understood by those skilled in the art that various changes in form and detail may be made therein without departing from the spirit and scope of the invention.

## Claims

1. A method in a data processing system having a video display and a pressure sensitive graphical input device for providing an indication of variations in pressure exerted at said pressure sensitive graphical input device, said method comprising the steps of:
displaying a graphic representation within said video display at point indicative of an input from said pressure sensitive graphical input device;
periodically determining an amount of pressure exerted at said pressure sensitive graphical input device; and
varying an appearance aspect of said graphic representation within said video display in response to variations in said amount of pressure exerted at said pressure graphical sensitive input device.

2. The method in a data processing system having a video display and a pressure sensitive graphical device for providing an indication of variations in pressure exerted at said pressure sensitive graphical input device according to Claim 1, wherein said graphic representation comprises a color representation and wherein said step of varying an appearance aspect of said graphic representation within said video display in response to variations in said amount of pressure exerted at said pressure sensitive graphical input device comprises varying a color of said color representation within said video display in response to variations in said amount of pressure exerted at said pressure sensitive graphical input device.

3. The method in a data processing system having a video display and a pressure sensitive graphical input device for providing an indication of variations in pressure exerted at said pressure sensitive graphical input device according to Claim 1 wherein said graphic representation includes a numeric indicia representative of an amount of pressure exerted at said pressure sensitive graphical input device and wherein said step of varying an appearance aspect of said graphic representation within said video display in response to variations in said amount of pressure exerted at said pressure sensitive graphical input device comprises varying said numeric indicia in response to variations in said amount of pressure exerted at said pressure sensitive graphical input device.

4. The method in a data processing system having a video display and a pressure sensitive graphical input device for providing an indication of variations in pressure exerted at said pressure sensitive graphical input device according to Claim 1, wherein said graphic representation includes nominal dimensions representative of an amount of pressure exerted at said pressure sensitive graphic input device and wherein said step of varying an appearance aspect of said graphic representation within said video display in response to variations in said amount of pressure exerted at said pressure sensitive graphical input device comprises varying the dimensions of said graphic representation.

5. The method in a data processing system having a video display and a pressure sensitive graphical input device for providing an indication of variations in pressure exerted at said pressure sensitive graphical input device according to Claim 1, wherein said steps of displaying a graphic representation within said video display at a point indicative of an input from said pressure sensitive graphical input device comprises displaying a graphic pointer image at a point indicative of an input from said pressure sensitive graphical input device.

6. A system for providing an indication of variations in pressure exerted at a pressure sensitive graphical input device coupled to a data processing system, said data processing system having a video display device, said system comprising:
display control means for displaying a graphic representation within said video display device at a point indicative of an input from said pressure sensitive graphical input device;
input determination means for periodically determining an amount of pressure exerted at said pressure sensitive graphical input device; and
display variation means coupled to said input determination means and said display control means for varying an appearance aspect of said graphic representation within said video display device in response to variations in said amount of pressure exerted at said pressure sensitive graphical input device.

7. The system for providing an indication of variations in pressure exerted at a pressure sensitive graphical input device coupled to a data processing system according to Claim 6, wherein said display control means displays a color graphic representation within said video display device and wherein said display variation means varies a color of said graphic representation within said video display in response to variations in an amount of pressure exerted at said pressure sensitive graphical input device.

8. The system for providing an indication of variations in pressure exerted at a pressure sensitive graphical input device coupled to a data processing system according to Claim 6, wherein said display control means displays a numeric indicia representative of an amount of pressure exerted at said pressure sensitive graphical input device and wherein said display variation means comprises means for varying said numeric indicia in response to variations in said amount of pressure exerted at said pressure sensitive graphical input device.

9. The system for providing an indication of variations in pressure exerted at a pressure sensitive graphical input device coupled to a data processing system according to Claim 6, wherein said display control means displays a graphic representation having nominal dimensions within said video display device and wherein said display variation means varies the dimensions of said graphic representation in response to variations in an amount of pressure exerted at said pressure sensitive graphical input device.

10. The system for providing an indication of variations in pressure exerted at a pressure sensitive graphical input device coupled to a data processing system according to Claim 6, wherein said display control means comprises means for displaying a graphic pointer image at a point within said video display device at a point indicative of an input from said pressure sensitive graphical input device.

11. The system for providing an indication of variations in pressure exerted at a pressure sensitive graphical input device coupled to a data processing system according to Claim 6, wherein said pressure sensitive graphical input device comprises a pressure sensitive touch screen and wherein said display variation means comprises an appropriately programmed processor within said data processing system.

12. The system for providing an indication of variations in pressure exerted at a pressure sensitive graphical input device coupled to a data processing system according to Claim 6, wherein said pressure sensitive graphical input device comprises a pressure sensitive mouse device and wherein said display variation means comprises an appropriately programmed processor within said data processing system.
